# FASCICULE DE BREVET EUROPEEN

(11) **EP 1 817 220 B1**
(45) Date de publication et mention de la délivrance du brevet: **02.09.2009**
(21) Numéro de dépôt: 05804048.6
(22) Date de dépôt: 10.11.2005
(51) Int. Cl.: B62B 3/14, B62B 3/10

(54) **CHARIOT PRESENTANT DES MOYENS DE SUPPORT POUR SUPERPOSER DEUX PANIERS**
WAGEN MIT EINEM STÜTZMITTEL AUF DEM ZWEI KÖRBE GESTAPELT SIND
TROLLEY COMPRISING SUPPORT MEANS ON WHICH TWO BASKETS CAN BE STACKED

(30) Priorité: 17.11.2004 FR 0412190
(43) Date de publication de la demande: 15.08.2007
(73) Titulaire: Joalpe Industria de Expositores, S.A., 6200 Tortosendo (PT)
(72) Inventeur: ALVES, Manuel, P-6200 Tortosendo (PT); CUNHA, Pedro Joalpe Industria de Expositores, S.A., P-6200 Tortosendo (PT); ALVES PEREIRA , Térésa Joalpe Industria de Expositores S.A, P-6200 Tortosendo (PT)
(74) Mandataire: Duthoit, Michel Georges André
(86) Numéro de dépôt international: PCT/EP2005/012211
(87) Numéro de publication internationale: WO 2006/053706

(56) Documents cités:
- WO-A-96/23689
- DE-U1- 29 507 792
- DE-U1- 29 600 872
- FR-A- 2 562 019
- US-A- 1 837 664
- US-A- 3 168 329

## Description

La présente invention concerne un chariot, notamment pour le transport de marchandises, présentant des moyens de support pour superposer deux paniers.

Les paniers peuvent être du type de ceux classiquement connus et mis à disposition dans les magasins en libre-service, constitués d'un fond et de quatre flancs pour la définition d'une ouverture vers le haut, et comprenant généralement en outre au moins une anse de préhension.

Dans les magasins en libre-service de grande surface de vente, il est connu d'utiliser des chariots de grande dimension. Ces derniers, traditionnellement métalliques, sont particulièrement adaptés pour le transport de grandes quantités de produits. Toutefois, il reste relativement encombrant et sont inappropriés pour le transport de produits en plus faible quantité.

On connaît alors du document EP-1.403.164 un chariot constitué d'une structure apte à superposer deux paniers. Ce dernier est notamment constitué d'un socle monté sur roulettes et muni d'une réservation pour la réception d'un premier panier inférieur. Il présente en outre un montant arrière, s'élevant dudit socle, et apte à recevoir un second panier supérieur, au-dessus du panier inférieur. Le montant présente à son extrémité supérieure une poignée de manoeuvre du chariot. Le document DE 296 00 872 U décrit un chariot présentant les caractéristiques du préambule de la revendication indépendante.

Toutefois, lorsqu'un utilisateur manoeuvre et dirige le chariot, il n'a pas un accès direct au panier inférieur en raison dudit montant arrière. II doit donc à chaque fois qu'il désire ajouter un article contourner ce dernier.

Le but de la présente invention est de proposer un chariot pour le support de deux paniers qui pallie les inconvénients précités et permet de charger les deux paniers du chariot aisément.

Un autre but de la présente invention est de proposer un chariot peu encombrant notamment lors du stockage.

Un autre but de l'invention est de proposer un chariot à faible coût de revient.

Un autre but de l'invention est de proposer un chariot pour le support de paniers, lesquels paniers ainsi que leur contenu sont protégés contre les collisions avec d'autres chariots ou encore contre les collisions avec des éléments accessoires d'un magasin.

Un autre but de l'invention est de proposer un chariot permettant non seulement un accès aisé aux paniers mais également un chariot permettant de soulever et placer lesdits paniers sur ce dernier, d'un même côté, et sans avoir à le contourner.

D'autres buts et avantages de l'invention apparaîtront au cours de la description qui va suivre, qui n'est donnée qu'à titre indicatif et qui n'a pas pour but de la limiter.

L'invention concerne tout d'abord un chariot, notamment pour le transport de marchandises présentant des moyens de support aptes à superposer deux paniers, un premier panier inférieur et un deuxième panier supérieur, l'un au-dessus de l'autre, lesdits paniers étant constitués d'un fond et de quatre flancs pour la définition d'une ouverture vers le haut, ledit chariot présentant en outre des moyens de préhension pour sa manoeuvre disposés sur l'un de ses côtés, dit de manoeuvre, et étant muni de roulettes, caractérisé en ce que les moyens de support sont constitués par au moins deux montants latéraux aptes à venir en prise, directement ou indirectement, avec lesdits paniers, au moins au niveau de deux de leurs flancs opposés, de telle façon à créer un dégagement permettant un accès direct à l'ouverture desdits paniers inférieur et supérieur, à partir du côté de manoeuvre, ledit panier inférieur étant situé dans une position sensiblement décalée par rapport audit panier supérieur, ledit panier inférieur étant avancé en direction dudit côté de manoeuvre.

L'invention sera mieux comprise à la lecture de la description, accompagnée des figures en annexe, parmi lesquelles :
- la figure 1 est une vue en perspective d'un chariot conforme à l'invention selon un premier mode de réalisation,
- la figure 2 est une vue en perspective d'une variante d'un chariot tel qu'illustré à la figure 1, sans panier.
- la figure 3 est une vue en perspective d'un chariot conforme à l'invention selon un second mode de réalisation,
- la figure 4 est une vue de côté du chariot tel qu'illustré à la figure 3,
- la figure 5 est une en perspective d'un chariot conforme à l'invention selon un troisième mode de réalisation,
- la figure 6 est une vue de côté du chariot tel qu'illustré à la figure 5,
- la figure 7 est une vue en perspective d'un chariot conforme à l'invention selon un quatrième mode de réalisation,
- la figure 8 est une vue de côté du chariot tel qu'illustré à la figure 7.

L'invention concerne un chariot 1, notamment pour le transport de marchandises, présentant des moyens de support 2, 6, aptes à superposer deux paniers, un premier panier inférieur 5₁ et un deuxième panier supérieur 5₂ l'un au-dessus de l'autre.

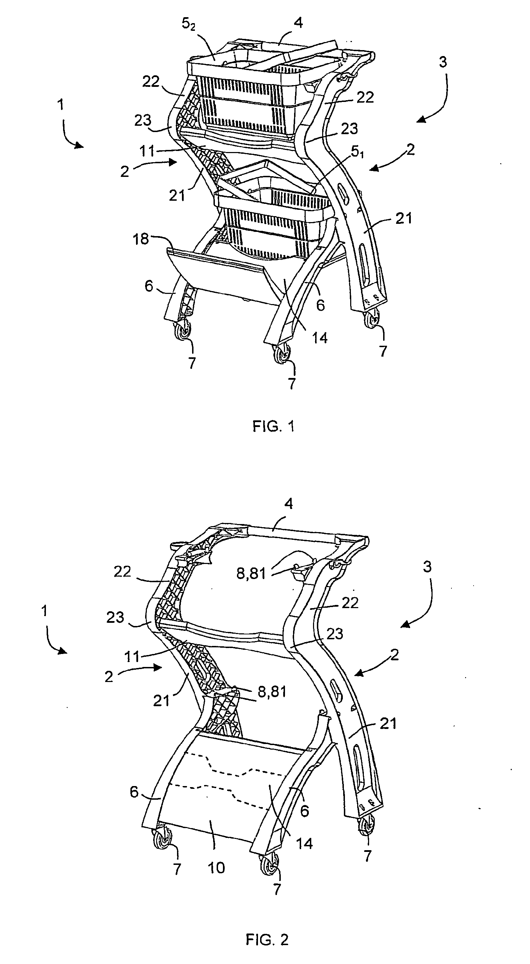

Lesdits paniers sont constitués traditionnellement d'un fond et de quatre flancs pour la définition d'une ouverture vers le haut, et peuvent présenter tels qu'illustrés à la figure 1, une anse.

Ledit chariot présente en outre des moyens de préhension 4 pour sa manoeuvre disposés sur l'un de ses côtés 3 dit de manoeuvre, ainsi que des roulettes 7.

Selon l'invention, les moyens 2, 6 de support sont constitués par au moins deux montants latéraux 2, aptes à venir en prise, directement ou indirectement, avec lesdits paniers 5₁, 5₂ , au moins au niveau de leurs flancs opposés, de telle façon à créer un dégagement permettant un accès direct à l'ouverture desdits paniers inférieur 5₁ et supérieur 5₂, à partir du côté de manoeuvre 3.

Ainsi, telle qu'illustrée aux figures, la structure du chariot de la présente invention, et notamment lesdits moyens de support, ne limitent pas l'accès, notamment de l'ouverture du panier inférieur 5₁.

Par ailleurs, les paniers inférieur 5₁ et supérieur 5₂ amovibles peuvent être soulevés et placés sur le chariot 1 à partir du côté de manoeuvre 3.

Les moyens de support 2, 6 disposent les paniers inférieur et supérieur, sensiblement horizontaux.

Selon un mode de réalisation conforme à l'invention, les moyens 2, 6 de support sont aptes à positionner ledit panier inférieur 5₁ dans une position sensiblement décalée par rapport audit panier supérieur 5₂, ledit panier inférieur étant avancé en direction du côté de manoeuvre 3.

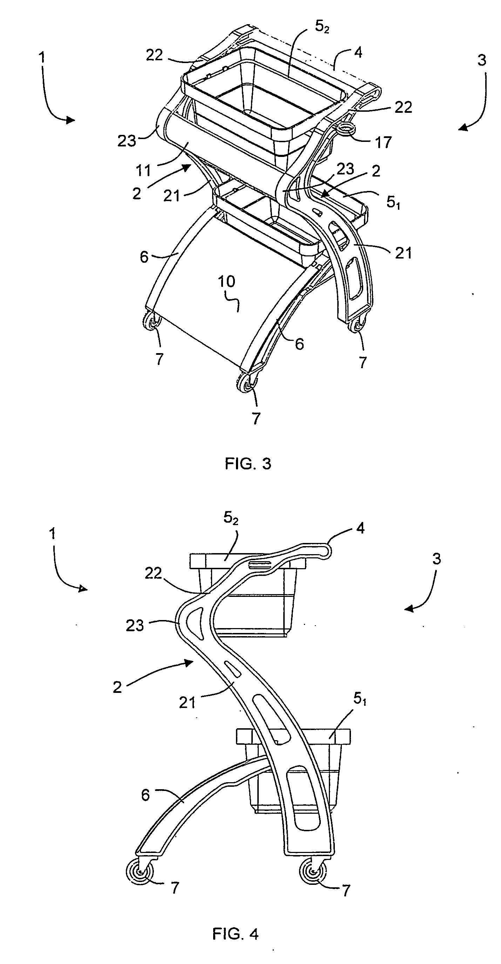

Tel qu'illustré aux figures 4, 6 et 8, le panier inférieur est disposé parallèlement audit panier supérieur légèrement décalé d'environ la moitié de sa largeur en direction du côté de manoeuvre 3. Cette disposition permet avantageusement un meilleur accès à l'ouverture dudit panier inférieur 5₁, la partie basse du panier supérieur 5₂ ne constituant pas un obstacle pour le bras de l'utilisateur lors du chargement du panier inférieur 5₁.

Cette disposition permet également à l'acheteur d'avoir une bonne visibilité des produits contenus dans les deux paniers, sans avoir à se baisser.

Avantageusement, les paniers sont maintenus au niveau de deux flancs opposés constituant les petits côtés du panier.

En outre, le centre de gravité des paniers est situé à l'aplomb d'un point situé entre les roulettes du chariot. Avantageusement, les moyens de support sont aptes à positionner le centre de gravité dudit panier supérieur 5₂ à l'aplomb d'un point sensiblement équidistant aux roulettes du chariot. En effet, le panier supérieur étant disposé à une hauteur élevée, son centre de gravité sera situé au milieu du chariot afin d'éviter tout basculement intempestif dudit chariot.

Selon un choix de réalisation, les moyens de support sont disposés parallèles et sont constitués par deux jambes courbes 2, notamment de forme générale en C, présentant chacune une première partie 21 inférieure inclinée en direction du côté opposé audit côté de manoeuvre 3, et une deuxième partie 22 supérieure inclinée en direction du côté de manoeuvre 3.

Telle qu'illustrée aux figures 1 à 4 et 7 à 8, la première partie 21 inférieure est sensiblement plus longue que la deuxième partie 22 supérieure, ladite première partie 21 étant notamment en longueur deux fois supérieures à la longueur de ladite deuxième partie 22. Toujours aux mêmes figures, le coude 23 joignant les deux parties 21, 22 est situé à une hauteur représentant environ les ¾ de la hauteur des jambes 2.

Lesdites jambes courbes permettront avantageusement de positionner le panier inférieur 5₁ de façon décalée par rapport audit panier supérieur 5₂.

Le coude 23 joignant la partie inférieure 21 et la partie supérieure 22 permet en cas de collision frontale du chariot de protéger le panier supérieur 5₂.

Le chariot présente deux pieds 6 s'étendant en avant desdites jambes. Avantageusement, les pieds s'étendent en avant desdites jambes 6 à partir de ladite première partie 21 inférieure.

Les pieds 6 permettront également de protéger le panier inférieur 5, contre les collisons.

L'extrémité libre inférieure desdits pieds 6 et/ou jambes courbes 2, est équipée de roulettes 7.

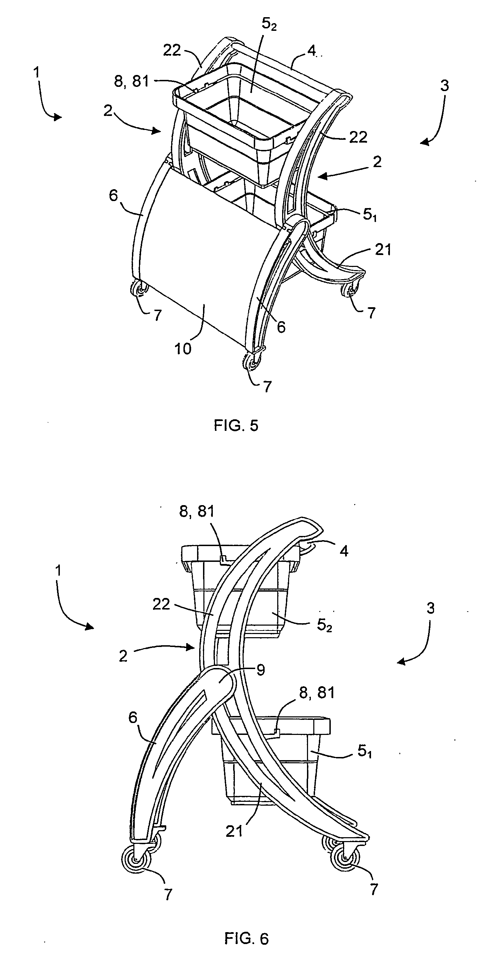

Selon un mode de réalisation tel qu'illustré aux figures 5 et 6, les pieds 6 présentent des moyens 9 d'articulation auxdites jambes et sont aptes à se déplacer d'une position écartée d'utilisation à une position rapprochée pour le stockage des chariots.

Ainsi, telles qu'illustrées à la figure 6, les pieds 6 sont articulées au moyen d'une liaison pivot 9 auxdites jambes courbes 2. Les deux pieds constituant le chariot sont assujettis en rotation au moyen d'une entretoise 14 (en pointillés) située derrière une plaque 10 conformée.

Avantageusement, les pieds 6 et ladite partie 21 inférieure desdites jambes présentent une forme similaire et notamment une même courbure. Ainsi, lorsque les pieds 6 sont recourbés, le chariot peut être stocké en occupant un espace minimum.

Par ailleurs, le chariot présente une barre de préhension 4 disposée entre les deux extrémités libres supérieures desdites jambes courbes 2. Avantageusement, et telle qu'illustrée aux figures, cette dernière sera disposée à proximité du panier supérieur 5₂ et plus particulièrement à proximité du bord supérieur du panier.

Selon un choix de réalisation, la structure du chariot et notamment les montants latéraux, sont maintenus au moyen d'entretoises 4, 11, 14 disposées entre lesdites jambes courbes 2 et/ou les pieds 6.

Les entretoises peuvent être assemblées aux jambes 2 et/ou aux pieds 3 par l'intermédiaire de moyens de clipage.

Le chariot peut être adapté à différentes dimensions de paniers en utilisant des entretoises de différentes longueurs.

Ainsi, pour une bonne tenue entre les deux montants latéraux, le chariot nécessite au moins deux entretoises. Il est à noter qu'une première entretoise peut être avantageusement constituée par ladite barre de préhension 4. Les pieds d'appui 6 peuvent être assujettis au moyen d'une autre entretoise 14 située derrière la plaque entretoise 10, notamment conformée qui a pour objet de servir de support publicitaire.

Tel qu'illustré à la figure 3, au moins un profilé plastique transparent 10, 11 notamment constitués par les entretoises, permet d'afficher des publicités.

Tel qu'illustré aux figures 1 à 3, le chariot pourra également présenter une entretoise supplémentaire notamment constituée par une barre 11 disposée au niveau des coudes 23 afin de rigidifier la structure du chariot, cette dernière permettant également de protéger le panier supérieur lors d'une collision frontale.

Il est à noter que le chariot nécessite deux ou plusieurs (>2) entretoises pour joindre les montants, et notamment les jambes 2 et/ou les pieds 6. Ces entretoises sont placées avantageusement aux endroits nécessaires et peuvent se présenter sous différentes formes et avoir une fonction supplémentaire telle que notamment la protection des paniers.

Ainsi, selon une variante illustrée à la figure 1, le chariot présente une entretoise 14 et une tablette 18 de forme générale rectangulaire.

Cette dernière est articulée, en pivot au niveau de son arête inférieure, auxdits pieds 6 ou auxdites jambes 2 pour se déplacer d'une position de rangement (non illustrée) à une position d'utilisation stable.

Dans la position d'utilisation, ladite tablette 18 coopère avec l'entretoise 14, et forme un réceptacle en V apte à accueillir des marchandises, notamment des bouteilles. Par exemple, le réceptacle formé permettra notamment de transporter six bouteilles d'eau de contenance d'un litre et demi stockées horizontalement.

La tablette peut permettre également de porter un troisième panier.

Dans la position de rangement, la tablette 18 est plaquée contre l'entretoise 14 permettant ainsi auxdits chariots de s'empiler l'un dans l'autre.

Il est à noter, également, que les paniers 5₁, 5₂ participent, lorsqu'ils sont fixés à la structure, notamment aux deux montants latéraux 2, et aux pieds 6, à rigidifier et renforcer la structure du chariot 1.

Tels qu'illustrés aux figures, les montants latéraux et notamment les pattes 6 et/ou les jambes courbes 2 sont équipées de moyens crampon 8 aptes à venir en prise avec lesdits paniers.

Selon un mode de réalisation, tel qu'illustrée aux figures 5 et 6, par exemple, lesdits paniers présenteront une protubérance sur deux flancs opposés, munie d'au moins une ouverture apte à venir en prise avec deux doigts 81 des moyens crampon 8.

Selon un autre mode de réalisation illustré à la figure 1, les paniers 5₁ et 5₂ peuvent présenter un bord supérieur recourbé vers le bas, formant un redan sur le pourtour du panier. Les moyens crampon 8 peuvent alors prendre la forme de doigts 81 aptes à faire saillie au niveau du redan du bord ainsi constitué.

Avantageusement, tels qu'illustrés aux figures, les moyens crampon peuvent être disposés au niveau de l'extrémité supérieure des pieds 6 tels qu'illustrés à la figure 2, ces derniers étant disposés assujettis aux jambes courbes 2 au niveau d'un côté tourné vers l'intérieur du chariot. Les moyens crampon 8 peuvent être disposés au niveau d'une cale pour le panier supérieur, ladite cale étant assujettie auxdites jambes courbes 2. La cale et la jambe 2 peuvent également constituer une seule et même pièce.

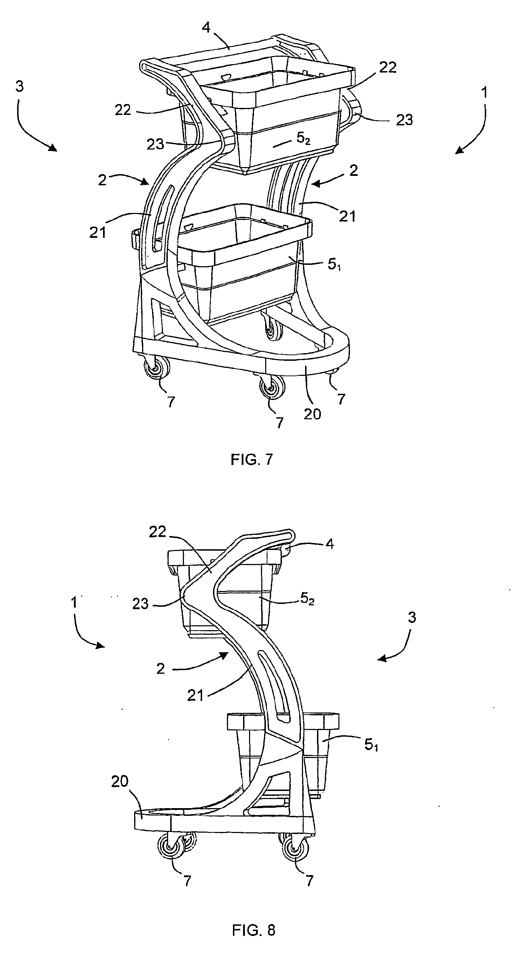

Selon un autre mode de réalisation illustré aux figures 7 et 8, les montants latéraux et notamment les jambes courbes 2 constituent une même pièce, ces dernières étant assujetties à une base 20 commune.

La base 20, telle qu'illustrée aux figures 7 et 8 s'étend avantageusement en avant au niveau du panier inférieur 5₁ et permet notamment de protéger ce dernier contre les collisions frontales.

Cela étant, les chariots présentent des moyens d'enchevêtrement pour être empilés lors de leur stockage. Ainsi les montants 2, 6 présentent des inclinaisons permettant de les empiler verticalement les uns dans les autres. Ainsi, la première partie 21 inférieure et la deuxième partie 22 supérieure des jambes 2 sont inclinées avantageusement pour permettre à ces dernières de s'empiler.

De la même manière, les pieds 6, entretoises 11, 14, tablette 18 et plaque 10 sont inclinés pour arriver à ce résultat.

Selon une variante de réalisation telle qu'illustrée aux figures 1 à 4, les pieds 6 sont décalés par rapport auxdites jambes 2 dans un plan sensiblement parallèle afin de pouvoir s'enchevêtrer entre ces dernières. Selon une autre variante de réalisation illustrée aux figures 5 et 6, les pieds 6 sont articulés et rapprochés de ladite jambe courbe 2 lors du stockage.

Telle qu'illustrée aux figures 7 et 8, la base 20 présente un profil globalement en V et un dégagement arrière de telle façon à pouvoir être empilées l'une dans l'autre.

Les différents éléments constituant le chariot et notamment les jambes courbes 2, les entretoises, barres de préhension 4 et pattes 6 pourront être avantageusement réalisées en matière plastique, et notamment par les procédés connus de moulage par injection. Tels qu'illustrés aux figures 1 et 2, les divers éléments pourront présenter une structure gaufrée dans un souci d'économie de matière et de résistance aux efforts.

De même, les éléments constituant le chariot pourront être avantageusement assemblés sans vis ni pièce rapportée, à l'aide de moyens de clipage entre ces derniers.

Cette disposition permet de livrer le chariot en kit, l'utilisateur pouvant aisément assembler ce dernier. Si un élément du chariot est endommagé, il peut être aisément remplacé. Les coûts de livraison et de maintenance sont ainsi réduits.

En outre, le chariot 1 peut être équipé de divers accessoires, tels qu'un anneau support de bouquet de fleurs 17 ou encore, un dispositif antivol à pièce.

Le chariot peut être équipé de deux crochets faisant saillie latéralement des montants permettant notamment d'accrocher des vêtements par leur cintre, ou encore d'accrocher un sac à main. Une pince peut être prévue pour maintenir une liste de course.

L'invention concerne également un panier constitué d'un fond et de quatre flancs pour la définition d'une ouverture vers le haut, destiné à coopérer avec un chariot équipé de moyens crampon aptes à venir en prise avec lesdits paniers, prenant la forme de doigts 81.

Selon l'invention, le panier présente des ouvertures destinées à engager avec les doigts des moyens crampon.

Le panier peut être réalisé en matière plastique. Les ouvertures sont situées sur la portion haute du panier au niveau d'une protubérance formant un col.

Tel qu'illustré, le panier peut présenter deux ouvertures sur chacun des deux flancs opposés des petits côtés du panier.

Naturellement, d'autres modes de mise en oeuvre, à la portée de l'homme de l'art, auraient pu encore être envisagés sans pour autant sortir du cadre de l'invention.

## Revendications

1. Chariot (1), notamment pour le transport de marchandises, présentant des moyens de support (2, 6) aptes à superposer deux paniers, un premier panier inférieur (5₁) et un deuxième panier supérieur (5₂), l'un au-dessus de l'autre, lesdits paniers (5₁, 5₂) étant constitués d'un fond et de quatre flancs pour la définition d'une ouverture vers le haut, ledit chariot (1) présentant en outre des moyens de préhension (4) pour sa manoeuvre disposés sur l'un de ses côtés (3), dit de manoeuvre et étant muni de roulettes, les moyens de support sont constitués par au moins deux montants (2) latéraux aptes à venir en prisé, directement ou indirectement avec lesdits paniers (5₁,5₂), au moins au niveau de deux flancs opposés, de telle façon à créer un dégagement permettant un accès direct à l'ouverture desdits paniers inférieur (5₁) et supérieur (5₂), à partir du côté de manoeuvre (3), **caractérisé en ce que** ledit panier inférieur (5₁) est situé dans une position sensiblement décalée par rapport audit panier supérieur (5₂), ledit panier inférieur étant avancé en direction dudit côté de manoeuvre (3).

2. Chariot selon la revendication 1, dans lequel les moyens de support sont aptes à positionner le centre de gravité dudit panier supérieur (5₂) à l'aplomb d'un point sensiblement équidistant aux roulettes (7) du chariot.

3. Chariot selon la revendication 1, dans lequel lesdits montants sont disposés parallèles et sont constitués par deux jambes courbes (2) présentant chacune une première partie (21) inférieure inclinée en direction du côté opposé audit côté de manoeuvre (3), et une deuxième partie (22) supérieure inclinée en direction dudit côté de manoeuvre (3).

4. Chariot selon la revendication 3, dans lequel le chariot présente deux pieds (6) s'étendant en avant desdites jambes (2) à partir de ladite première partie (21) inférieure.

5. Chariot selon la revendication 4, dans lequel l'extrémité libre inférieure desdits pieds d'appui (6) et/ou jambes courbes (2) est équipée de roulettes (7).

6. Chariot selon la revendication 4, dans lequel les pieds (6) présentent des moyens d'articulation (9) auxdites jambes (2) et sont aptes à se déplacer d'une position écartée d'utilisation à une position rapprochée pour le stockage des chariots (1).

7. Chariot selon la revendication 3, dans lequel le chariot présente une barre de préhension (4) disposée entre les deux extrémités libres supérieures desdites jambes courbes (2).

8. Chariot selon la revendication 3 ou 4, dans lequel la structure du chariot est maintenue au moyen d'entretoises (4, 11, 14) disposées entre lesdites jambes courbes (2) et/ou lesdits pieds (6).

9. Chariot selon la revendication 1, dans lequel ledit chariot présente des moyens d'enchevêtrement pour être empilés lors de leur stockage.

10. Chariot selon la revendication 9, dans lequel les montants latéraux (2, 6) présentent des inclinaisons permettant de les empiler verticalement les uns dans les autres.

11. Chariot selon la revendication 8, dans lequel ledit chariot comporte en outre une tablette (18) articulée, coopérant avec une des entretoises (14) pour former un réceptacle ou apte à s'escamoter en position de rangement.

12. Chariot selon la revendication 1, dans lequel le chariot présente au moins un profilé plastique transparent permettant d'afficher des publicités.

13. Chariot selon la revendication 1, 4 ou 6 dans lequel les montants latéraux, à savoir notamment les jambes courbes (2) et les pattes d'appui (6) sont équipées de moyens crampons (8) aptes à venir en prise avec lesdits paniers, lesdits moyens crampons (8) étant constitués de doigts (81).

14. Chariot selon l'une des revendications 1 à 13 dans lequel les éléments constituant le chariot, à savoir notamment, les jambes courbes (2), les entretoises, la barre de préhension ou encore les pattes d'appui (6) sont réalisés en matière plastique et présentent des moyens de clipage pour un assemblage sans vis ni pièce rapportée.

15. Panier (5₁, 5₂) constitué d'un fond et de quatre flancs pour la définition d'une ouverture vers le haut destiné à coopérer avec un chariot selon la revendication 13, ledit chariot étant équipé de moyens crampons (8) aptes à venir en prise avec ledit panier (5₁, 5₂), lesdits moyens crampons (8) prenant la forme de doigts (81) **caractérisé en ce que** les flancs des paniers présentent des ouvertures destinées à engager avec les doigts (81) des moyens crampons (8).

## Claims

1. A trolley (1), in particular for the transport of goods, exhibiting supporting means (2, 6) capable of superimposing two baskets, a lower first basket (51) and a second upper basket (52), one above the other, said baskets (51, 52) being formed of a bottom and of four flanks to define an outward opening, said trolley (1) exhibiting moreover gripping means (4) for the operation thereof arranged on one of its sides (3), so-called operating side and being fitted with castors, the supporting means consist of at least two lateral stanchions (2) capable of meshing, directly or indirectly into said baskets (51,52), at least at two opposite flanks, so as to build a clearance providing direct access to the opening of said lower (51) and upper (52) baskets, from the operating side (3), **characterised in that** said lower basket (51) is situated in a position substantially offset relative to said upper basket (52), said lower basket moving forward in the direction of said operating side (3).

2. A trolley according to claim 1, wherein the supporting means are capable of locating the centre of gravity of said upper basket (52) vertical to a spot substantially equidistant to the castors (7) of the trolley.

3. A trolley according to claim 1, wherein said stanchions are arranged parallel and consist of two bent legs (2) each exhibiting a first lower portion (21) tilted towards the side opposite to said operating side (3), and a second upper portion (22) tilted in the direction of said operating side (3).

4. A trolley according to claim 3, wherein the trolley exhibits two feet (6) extending ahead of said legs (2) from said first lower portion (21).

5. A trolley according to claim 4, wherein the lower free end of said back-up feet (6) and/or bent legs (2) is fitted with castors (7).

6. A trolley according to claim 4, wherein the feet (6) exhibit means (9) for hinging to said legs (2) and are capable of moving from a spaced apart working position to a closer position for storing trolleys (1).

7. A trolley according to claim 3, wherein the trolley exhibits a gripping bar (4) arranged between both free upper ends of said bent legs (2).

8. A trolley according to claim 3 or 4, wherein the structure of the trolley is held by means of spacers (4, 11, 14) arranged between said bent legs (2) and/or said feet (6).

9. A trolley according to claim 1, wherein said trolley exhibits interlocking means for being piled up during the storage thereof.

10. A trolley according to claim 9, wherein the lateral stanchions (2, 6) exhibit tilted sections enabling to pile them up vertically into one another.

11. A trolley according to claim 8, wherein said trolley includes moreover a hinged tray (18), co-operating with one of the spacers (14) to form a receptacle or capable to retract into storage position.

12. A trolley according to claim 1, wherein the trolley exhibits at least one transparent plastic profile enabling to display advertisements.

13. A trolley according to claim 1, 4 or 6 wherein the lateral stanchions, i.e. in particular the bent legs (2) and the back-up lugs (6) are fitted with stud means (8) capable of meshing into said baskets, said stud means (8) being formed of fingers (81).

14. A trolley according to any of the claims 1 to 13 wherein the members forming the trolley, i.e. in particular, the bent legs (2), the spacers, the gripping bar or still the back-up lugs (6) are made of plastic material and exhibit fastening means for a screw-less assembly nor without any add-on parts.

15. A basket (51, 52) formed of a bottom and of four flanks to define an outward opening intended for co-operating with a trolley according to claim 13, said trolley being equipped with stud means (8) capable of meshing into said basket (51, 52), said stud means (8) being in the form of fingers (81) **characterised in that** the flanks of the baskets exhibit openings intended for engaging into the fingers (81) of the stud means (8).

## Patentansprüche

1. Wagen (1), insbesondere für den Transport von Waren, aufweisend Tragmittel (2, 6), geeignet um zwei Körbe, einen ersten, unteren Korb (5₁) und einen zweiten, oberen Korb (5₂), übereinander zu stellen, wobei die besagten Körbe (5₁, 5₂) aus einem Boden und vier Seiten bestehen, um eine Öffnung nach oben zu definieren, wobei der besagte Korb (1) außerdem Greifmittel (4) für seine Betätigung aufweist, die an einem seiner Seiten (3), die als Betätigungsseite bezeichnet wird, angeordnet sind, und mit Castor-Rädern versehen ist, die Tragmittel aus wenigstens zwei seitlichen Ständern (2) bestehen, die geeignet sind, um direkt oder indirekt mit den besagten Körben (5₁, 5₂), wenigstens im Bereich von zwei gegenüberliegenden Seiten im Eingriff zu kommen, sodass ein freier Raum gebildet wird, der einen direkten Zugang von der Betätigungsseite (3) aus zu der Öffnung der besagten unteren (5₁) und oberen (5₂) Körbe erlaubt, **dadurch gekennzeichnet, dass** der besagte untere Korb (5₁) sich in einer bezüglich des besagten oberen Korbes (5₂) im wesentlichen verschobenen Lage befindet, wobei der besagte untere Korb in Richtung auf die besagte Betätigungsseite (3) vorsteht.

2. Wagen nach Anspruch 1, bei dem die Tragmittel geeignet sind, den Schwerpunkt des besagten oberen Korbes (5₂) lotrecht zu einem zu den Castor-Rädern (7) des Wagens im wesentlichen äquidistanten Punkt zu positionieren.

3. Wagen nach Anspruch 1, bei dem die besagten Ständer parallel zu einander angeordnet und aus zwei gebogenen Beinen (2) bestehen, die jeweils einen ersten, unteren Teil (21), der in Richtung auf die der Betätigungsseite (3) gegenüberliegende Seite geneigt ist, und einen zweiten, oberen Teil (22), der in Richtung auf die Betätigungsseite (3) geneigt ist, aufweisen.

4. Wagen nach Anspruch 3, bei dem der Wagen zwei Füße (6) aufweist, die sich vor den besagten Beinen (2) ab dem besagten ersten, unteren Teil (21) erstrecken.

5. Wagen nach Anspruch 4, bei dem das untere, freie Ende der besagten Stützfüße (6) und/oder gebogenen Beinen (2) mit Castor-Rädern (7) versehen ist.

6. Wagen nach Anspruch 4, bei dem die Füße (6) Mittel zur Gelenkverbindung (9) mit den besagten Beinen (2) aufweisen und geeignet sind, sich von einer gespreitzten Verwendungsposition zu einer zusammengerückten Position für die Lagerung der Wagen (1) zu bewegen.

7. Wagen nach Anspruch 3, bei dem der Wagen eine Greifstange (4) aufweist, die zwischen den beiden freien, oberen Enden der besagten gebogenen Beinen (2) angeordnet ist.

8. Wagen nach Anspruch 3 oder 4, bei dem die Struktur des Wagens mittels Stege (4, 11, 14) aufrechterhalten wird, die zwischen den besagten gebogenen Beinen (2) und/oder den besagten Füßen (6) angeordnet sind.

9. Wagen nach Anspruch 1, bei dem der besagte Wagen Ineinandergreifmittel aufweist, um während dessen Lagerung aufgestapelt zu werden.

10. Wagen nach Anspruch 9, bei dem die seitlichen Ständer (2, 6) Neigungen aufweisen, die es erlauben, sie senkrecht ineinander aufzustapeln.

11. Wagen nach Anspruch 8, bei dem der besagte Wagen außerdem ein gelenktes Brett (18) umfaßt, das mit einem der Stege (14) zusammenwirkt, um einen Behälter zu bilden oder geeignet ist, um sich in Abstellposition zurückzuziehen.

12. Wagen nach Anspruch 1, bei dem der Wagen wenigstens ein durchsichtiges Kunststoffprofil aufweist, das erlaubt, Werbungen anzuzeigen.

13. Wagen nach Anspruch 1, 4 oder 6, bei dem die seitlichen Ständer, d.h. nämlich die gebogenen Beinen (2) und die Stützfüße (6) mit Greifmitteln (8) versehen sind, die geeignet sind, mit den besagten Körben im Eingriff zu kommen, wobei die besagten Greifmittel (8) aus Fingern (81) bestehen.

14. Wagen nach einem der Ansprüche 1 bis 13, bei dem die Bestandteile, aus denen der Wagen besteht, d.h. nämlich die gebogenen Beinen (2), die Stege, die Greifstange oder auch die Stützfüße (6), aus Kunststoff hergestellt sind und Verklipsungsmittel zwecks einer Zusammenfügung ohne Schrauben oder angesetztem Teil aufweisen.

15. Korb (5₁, 5₂), bestehend aus einem Boden und vier Seiten, um eine Öffnung nach oben zu definieren, dazu bestimmt, um mit einen Wagen nach Anspruch 13, zusammenzuwirken, wobei der besagte Wagen mit Greifmitteln (8) versehen ist, die geeignet sind, mit dem besagten Korb (5₁, 5₂) im Eingriff zu kommen, wobei die besagten Greifinittel (8) die Gestalt von Fingern (81) annehmen, **dadurch gekennzeichnet, dass** die Seiten der Körbe Öffnungen aufweisen, die dazu bestimmt sind, mit den Fingern (81) der Greifmittel (8) im Eingriff zu kommen.
